# EUROPEAN PATENT SPECIFICATION

(11) **EP 3 770 336 B1**
(45) Date of publication and mention of the grant of the patent: **27.12.2023**
(21) Application number: 20184832.2
(22) Date of filing: 08.07.2020
(51) Int. Cl.: E02F 9/20, B60W 30/188

(54) **METHOD OF REDUCING FUEL CONSUMPTION IN LOADERS, EXCAVATORS, BACKHOE LOADERS AND THE LIKE**
VERFAHREN ZUR REDUZIERUNG DES KRAFTSTOFFVERBRAUCHS IN LADERN, BAGGERN, TIEFLÖFFELBAGGERN UND DERGLEICHEN
PROCÉDÉ DE RÉDUCTION DE LA CONSOMMATION DE CARBURANT DES CHARGEUSES, EXCAVATRICES, CHARGEUSES RÉTROCAVEUSES ET AUTRES

(30) Priority: 22.07.2019 GB 201910466
(43) Date of publication of application: 27.01.2021
(73) Proprietor: Caterpillar Inc., Deerfield, IL 60015 (US)
(72) Inventor: HARPER, Robert N., Peterborough, Cambridgeshire PE1 5FQ (GB)
(74) Representative: Novagraaf Group

(56) References cited:
- US-A1- 2008 154 466
- US-A1- 2009 088 936
- US-A1- 2012 226 422

## Description

### Technical Field

The present disclosure relates to machines that use an internal combustion engine for multiple different purposes, such as for ground propulsion and for implement propulsion.

### Background

Machines such as loaders, excavators and backhoe loaders may use a single internal combustion engine to provide ground propulsion via a gearbox and to provide implement propulsion via a hydraulic pump.

In a ground propulsion mode, a first throttle may be used to control engine speed. An engine map may determine torque achievable for a particular speed. An operator selects an appropriate gear (using the gearbox) and engine speed (using the throttle) in order to achieve desired ground propulsion in the necessary circumstances, taking terrain, gradient and load into account.

In an implement propulsion mode, the engine is detached from the machine propulsion means by placing the gearbox in neutral and the engine is used instead to power a hydraulic pump. An operator may use a second throttle to select a desired engine speed and then uses an implement controller to execute movement of the implement.

On some machines, and for some implements, a hybrid mode may also be provided in which simultaneous ground propulsion and implement propulsion is possible.

For example, in the context of a backhoe loader, implement propulsion mode may relate to the backhoe while hybrid mode may relate to the loader. Accordingly, ground propulsion may be possible when using the loader but not when using the backhoe. Other machines may not have both an implement mode and a hybrid mode. For example, a loader may have a hybrid mode but no implement mode. Conversely, an excavator may have implement mode but no hybrid mode. The disclosure provides methods of saving fuel in implement mode and in hybrid mode.

Torque requirements may vary considerably during an operating cycle. In the implement propulsion mode, if the implement is an excavator arm, for example, the torque requirement may be particularly high when teeth of an excavator bucket mounted on the excavator arm first impact a surface to be excavated. By contrast, torque requirement may be considerably lower when positioning an empty bucket prior to excavating.

An engine torque curve of an engine map may be sized for all applications of a machine. Potential to use all parts of the torque curve for all activities, however, may result in inefficiencies. For example, in some scenarios the availability of high torque may provide a very modest benefit at the cost of significant additional fuel consumption.

In implement mode, for example, the desire to maintain speed and seek maximum torque may place a significant call on fuel. Furthermore, the significant call on fuel may prevail well beyond the period for which the maximum torque is called.

US2008154466 discloses a system and method for controlling a hydraulic pump for a machine.

US2009088936 discloses a continuous variable transmission control system having variable power source speed.

US2012226422 discloses powertrains having an engine connected to a transmission and, more particularly, to a powertrain having an adaptive shift control and/or a shift indicator.

### Summary of the disclosure

Against this background there is provided a method and a machine according to independent claims 1 and 10 respectively.

Accordingly, fuel consumption is reduced when performing tasks relating to implement propulsion by limiting torque availability except when the ratio of ground propulsion speed to engine speed drops below the speed ratio threshold.

### Brief description of the drawings

Figure 1 shows a backhoe loader to which the method of the present disclosure may be applied;
Figure 2 shows a graph of backhoe loader machine load against time during a trenching operation using the backhoe;
Figure 3 shows a graph that analyses time between peaks of different widths from the graph of Figure 2;
Figure 4 shows for implement propulsion mode various curves for different speeds whereby torque is limited in order to reduce fuel consumption;
Figure 5 shows a flowchart of concepts of operation in implement propulsion mode; and
Figure 6 shows a graph of torque against speed in accordance with two regular ground propulsion modes and one fuel saving ground propulsion mode.

### Detailed description

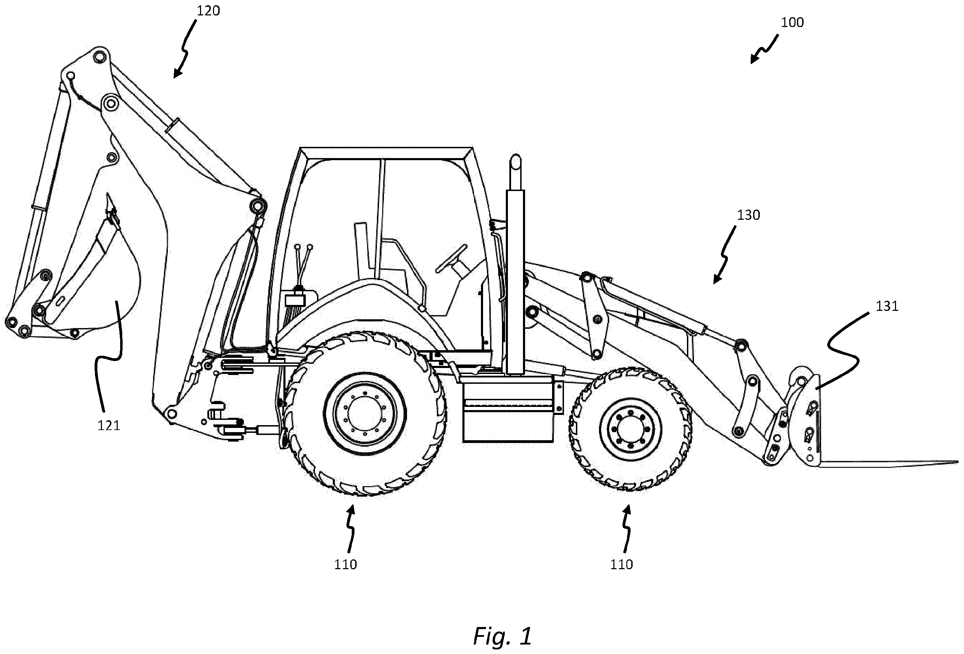

Figure 1 shows a backhoe loader 100 which uses an internal combustion engine (not shown) to provide ground propulsion via the wheels 110 and implement propulsion. The backhoe loader 100 has two implements, namely a backhoe 120 and a loader 130. Each of the backhoe 120 and the loader 130 may be hydraulically driven. The hydraulic system that drives the implements may be powered by a hydraulic pump which itself is powered by the internal combustion engine.

In the embodiment of Figure 1, the backhoe 120 is shown with a bucket attachment 121 and the loader is shown with a fork attachment 131. These may be substituted by other attachments. Couplings may be provided to facilitate such substitution.

In the case of the backhoe 120, it may be that the machine is governed such that this implement may be used only when there is no ground propulsion.

In the case of the loader 130, it may be that the machine is governed such that the loader may be used at the same time as ground propulsion of the machine.

An engine controller may make use of one or more engine maps that receive inputs based on various engine variables and output various engine outputs.

When the backhoe is in use, it may be that ground propulsion is prevented. However, when the loader is in use, ground propulsion may be possible. In the context of the present disclosure, implement propulsion mode may refer to implement propulsion without ground propulsion (which in the context of a backhoe loader may mean backhoe operation) while hybrid propulsion mode may refer to simultaneous ground propulsion and implement propulsion (which in the context of a backhoe loader may mean loader operation).

The disclosure is in no way limited to use with a backhoe loader. Aspects relating to implement propulsion may, for example, apply to an excavator where the implement is an excavator arm. Aspects relating to hybrid operation may, for example, apply to a telehandler where the implement is a telescopic arm.

The disclosure focuses largely on a backhoe loader since it is possible to show multiple aspects of the functionality of the disclosure in a single example machine.

### Implement only prolusion mode

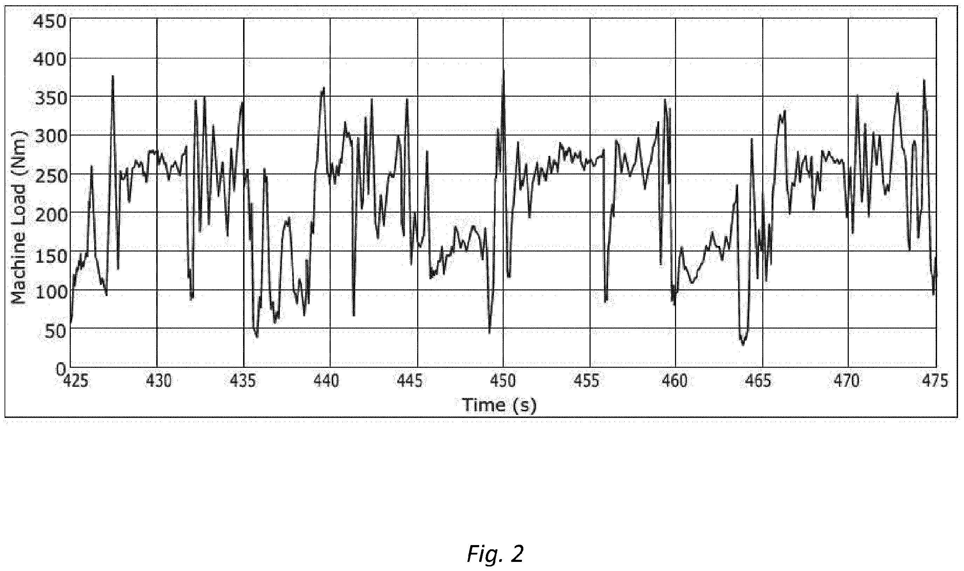

Figure 2 shows a graph of backhoe loader machine load against time during a typical trenching operation using the backhoe when operated using a full engine control map (from the prior art; that is a map without any specific implement control mode restrictions). This constitutes implement propulsion mode; ground propulsion is not available during this cycle.

As can be seen, engine load fluctuates between below 50 Nm and above than 350 Nm. These fluctuations correspond with different activities during a trenching cycle. For example, a point of impact of an implement attachment with the ground to be trenched may correspond to a high torque requirement. By contrast, positioning of an empty implement attachment above the ground may correspond to a low torque requirement.

Providing the full torque range of the engine throughout this cycle may result in inefficient engine use. In other words, facilitating this full range of torques at all engine speeds may result in large fuel consumption for only brief benefits.

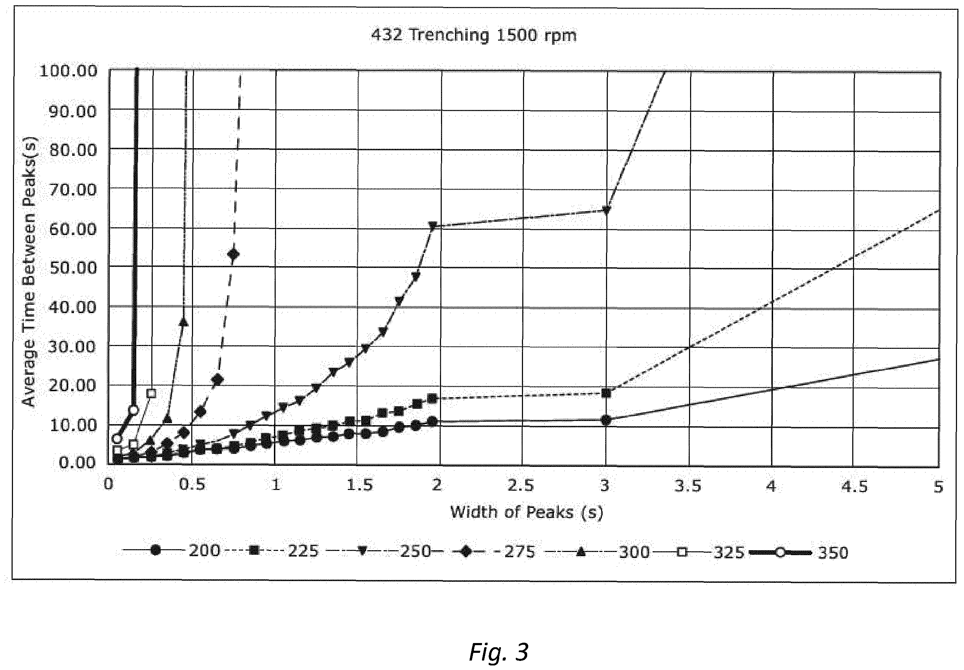

Analysis of the time between peaks of different peak widths shown in Figure 2 is shown in Figure 3. This figure reveals that, in general, the higher the torque peak requirement, the shorter the duration of the peak. The figure also reveals that the higher the torque peak requirement, the less frequently they occur (that is, the longer the average time between peaks).

In general, therefore, it can be concluded that various high torque requirements can be both short and infrequent. The full engine map is generally configured to facilitate rapid and complete fulfilment of the wide range of torque demands. In order to fulfil the full range of torques with minimum delay and without compromising engine speed, over-fuelling is common. In other words, a proportion of the increased fuelling is likely to be redundant because effect on fuel consumption lasts longer than the peak demand for torque.

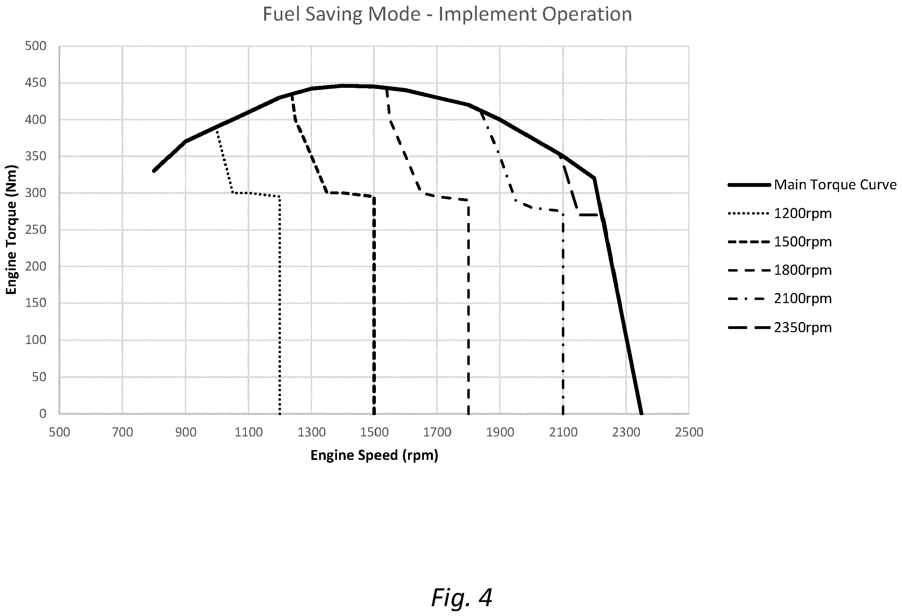

Figure 4 shows fuel saving functionality in an implement propulsion mode in accordance with the present disclosure. The arched line shows the full torque speed envelope facilitated by the engine map. The full gamut of engine torque responses (that is the full area under the arched line) may be available in ground propulsion mode, where torque requirements are likely to be much less fluctuating than the behaviour shown in Figure 2, or in any circumstance when there is no desire for fuel saving functionality.

However, in implement propulsion mode (that is, in backhoe mode without ground propulsion), a torque limit curve may be applied, dependent upon the desired speed. Such a torque limit curve is shown for various desired speeds. In the example of Figure 4, the torque is limited, depending on the speed, to between 270 Nm and 300 Nm. The particular torque limits may be selected because of the relative infrequency and brevity of calls for such torque at such speeds when operating a typical backhoe loader operation (as shown in Figure 2). While the example of Figure 4 has torque limits of between 270 Nm and 300Nm, these values may be different depending upon the machine and the application. When selecting an appropriate torque limit, it may be that it is selected such that engine response is largely unaffected by short duration torque spikes during implement operation.

One consequence of implementing a torque limit in accordance with the limits shown in Figure 4 is that it gives rise to the possibility of reduction in engine speed, also known as lug. The arrangement of the present disclosure facilitates limited lug, as described further below. Limited lug may have a minor impact on machine operation but a more significant reduction on fuel consumption. By contrast, unlimited lug may be highly undesirable because it could have a major impact on machine operation and, moreover, in some circumstances can lead to stalling the engine.

In accordance with the disclosure, in order to maximise fuel efficiency whilst minimising impact on the operator, engine lug in the implement mode may be limited in various ways.

First, the shape of each torque limit curve is such that when engine speed drops to a first threshold speed, the torque limit increases gradually. For example, looking to the Figure 4 embodiment, for a desired engine speed of 1,500 rpm the torque limit is largely constant at approximately 300 Nm until such time as speed drops to 1,350 rpm, at which speed the torque limit gradually increases for additional engine lug until, at a speed of approximately 1,250 rpm the limit is removed such that standard engine operating parameters (as represented by the solid line in Figure 2) dictate the maximum torque.

In accordance with the Figure 4 example, for a desired speed of 1,500 rpm, the limited torque of 300 Nm represents approximately 0.66 of the maximum available torque (approximately 450 Nm) at 1,500 rpm as defined by the primary operating conditions. For a desired speed of 2,100 rpm, the limited torque of 275 Nm represents approximately 0.78 of the maximum available torque of approximately 350 Nm available at that speed.

In general, the initial torque limit may be between 0.65 and 0.99 of the maximum torque available in accordance with the primary operating constraints.

Secondly, in the event that engine speed falls below a second threshold speed for a sustained period (which may be termed a maximum speed drop period, t) the method may trigger removal of the torque limit speed curve altogether such that standard operating parameters (as represented by the solid line in Figure 2) dictate the maximum torque. The second threshold speed may be a higher speed than the first threshold speed. In other words, the second threshold speed may represent a smaller engine lug than the first threshold speed. For example, for a target speed of 1,500 rpm, the second threshold speed may be 1,400 rpm.

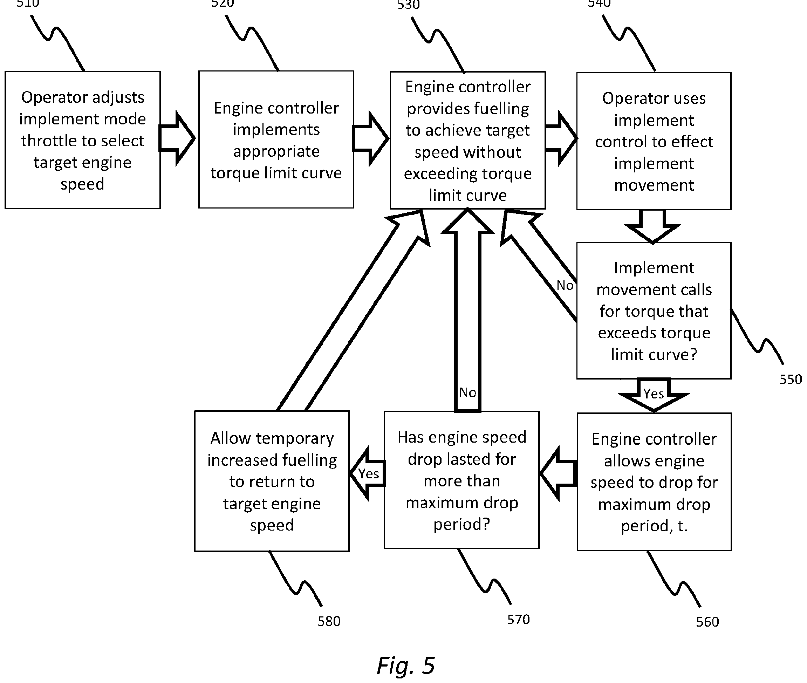

Figure 5 shows a flow chart of the time limiting aspect of the implement propulsion mode fuel saving functionality. In the example of a backhoe loader, the implement used in implement (only) propulsion mode may be the backhoe. In an alternative example, in an excavator, the implement may be the excavator arm.

At step 510, the operator adjusts the throttle to select target engine speed. This may be in a conventional manner. As step 520, the engine implements a torque limit curve in accordance with the disclosure. Figure 3 represents examples of such torque limits.

At step 530, the engine controller provides fuelling to achieve target speed.

Then, at step 540, the operator uses implement control to effect implement movement. This may be in a conventional manner.

Referring to step 550, in an event that implement movement calls for a torque that is sufficiently low that the desired speed can be maintained, operation continues as described above in relation to step 530, whereby the engine controller continues to provide fuelling to achieve target speed.

Referring again to step 550, in an event that implement movement calls for a torque that cannot be provided without a drop in speed, the engine allows the engine speed to drop (see step 560).

There are, however, two limits on the speed drop.

First, if the speed drop exceeds a first threshold speed, the torque limit is gradually lifted for speeds that drop further relative to the first threshold speed. This is illustrated by the sloped limes in Figure 4 that take the torque limits back to the full torque envelope.

Secondly, a speed drop that exceeds a second threshold is allowed only for a limited period (step 570). If, within that period, the torque demand drops such that it can be fulfilled again without a drop in speed then, once again, operation continues as described above in relation to step 530, whereby the engine controlled continues to provide fuelling to achieve target speed without exceeding the torque limit. If, on the other hand, at the end of the limited period, the torque demand remains such that speed continues to fall below the target speed, a temporary increase in fuelling is allowed in order to return engine speed to target (step 580).

In this way, a limit is placed on the amount of fuelling that is called for in order to maintain torque and speed during short spikes of torque demand. Where increased torque demand prevails for longer than a threshold period, additional fuelling may be facilitated.

Accordingly, fuel consumption may be significantly reduced without significant impact on operation.

In a further alternative (also not shown in Figure 5), it may be that situations when temporary additional fuel may be provided are determined by a combination of magnitude and duration of engine lug.

### Hybrid ground propulsion and implement propulsion

In the example of the backhoe loader, while the backhoe may not be usable simultaneously with ground propulsion, the loader implement is usable simultaneously with the ground propulsion. This may be termed hybrid ground propulsion and implement propulsion, or hybrid mode.

Other machines, such as telehandlers and bulldozers, may also have implements that are usable simultaneously with ground propulsion.

Making available the full envelope for loader operations may have a significant impact in fuel consumption in order simply to provide slightly more rapid movement of the implement and to provide maximum tractive effort.

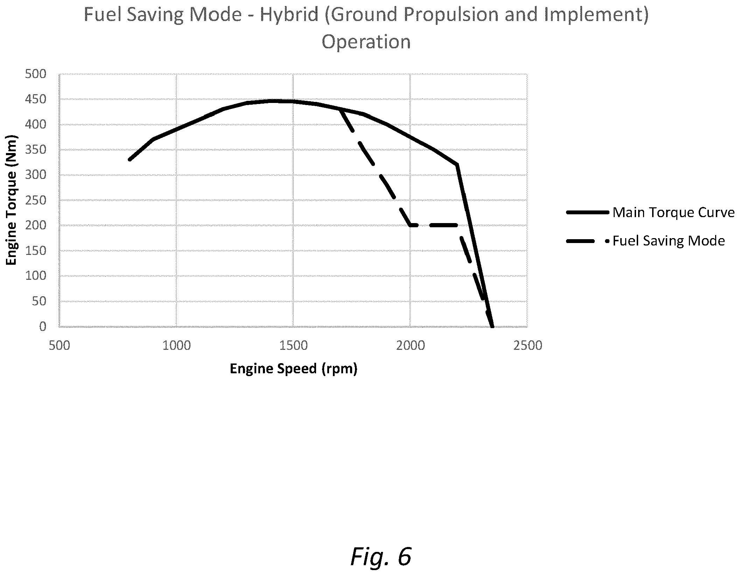

Figure 6 shows the regular torque curve envelope for the full engine map (as a solid line, and potentially the same as that of Figure 2) alongside a fuel saving torque limited envelope (as a broken line).

As can be seen, in the example of Figure 6, for speeds above 1,700 rpm the torque is limited relative to the full torque speed envelope. In the example, for speeds above 2,000 rpm, torque is limited to 200 Nm.

In accordance with the disclosure, in order to maximise fuel efficiency whilst minimising impact on the operator, engine lug in the hybrid mode may be limited in various ways.

First, when lug is such that engine speed drops below a first threshold, the torque limit is gradually lifted such that if engine speed drops to below a second threshold, the full torque envelope becomes available. This is represented by the torque limit curve of Figure 6.

Secondly, it may be that certain operating conditions trigger removal of the torque limit curve altogether such that standard operating parameters (as represented by the solid line in Figure 2) dictate the maximum torque.

The certain operating conditions that trigger removal of the torque limit curve may be detection of a requirement for high tractive effort. Such detection may be provided by monitoring torque converter slip. For example, in circumstances where the ratio of ground propulsion speed to engine speed drops below a speed ratio threshold, this may trigger removal of the torque curve limit. The speed ratio threshold may be between 0.2 and 0.4. For example, the speed ratio threshold may be 0.2, 0.3, or 0.4. When the speed ratio falls below the speed ratio threshold it may be that the torque limit curve is removed temporarily in order to facilitate the provision of more torque. This will result on a call for additional fuel for a short period.

It may be that fuel saving functionality in the hybrid mode is made available in a first plurality of lower gears and not in a second plurality of higher gears. (In a machine having six gears, the first plurality of lower gears may be gears 1, 2, 3 and 4 while the second plurality of higher gears may be gears 5 and 6.) The second higher gears may instead allow the full torque speed envelope. This is because the higher gears are generally not used for loader operations but largely only for highway driving. Therefore the opportunities to save fuel by implementation of the torque limit curve are much more limited.

One consequence of the torque limit in the hybrid mode is that the speed of implement movement (especially, for example, when lifting a heavy load) or the maximum tractive effort may be slightly reduced. The benefit of these reductions is seen in a more significant drop in fuel consumption.

### Alternatives

The methods of the present disclosure may apply to a range of different machines, and are not limited to a backhoe loader.

Alternative implements to those shown and described fall within the scope of the disclosure. Furthermore, implements may constitute an arm (in the case of an excavator) to which an attachment (e.g. a bucket) is attachable. Alternatively, implements may constitute a complete implement system such as a telehandler with a permanent platform. Alternative ground propulsion functionality falls within the scope of the present disclosure. For example, ground propulsion may be effected by continuous tracks rather than wheels.

Numerous other alternatives fall within the scope of the appended claims.

### Industrial applicability

The methods of the present disclosure may be particularly applicable to machines that use one engine to provide ground propulsion and implement propulsion. By limiting the full engine operating envelope in certain circumstances, areas of engine operation within the full envelope that result in high fuel consumption for minimal gain are excluded. In this way, fuel consumption can be reduced. At the same time, where envelope limitation would result in noticeable reduction in machine operability, the restrictions in operating envelope are suspended at least in part in order that an operation efficiency is not appreciably reduced.

## Claims

1. A method of reducing fuel consumption in a machine (100) with an internal combustion engine, the machine having a hybrid mode in which the engine is used for simultaneous ground propulsion via a torque convertor and hydraulic implement propulsion via a hydraulic pump, the engine controller using a first engine map that defines primary operating constraints, wherein the method comprises:
obtaining an initial torque limit value for the engine from a torque limit profile (520) providing operating constraints that fall within the primary operating constraints;
implementing an engine torque limit that corresponds to the initial torque limit value such that in an event that a torque demand exceeds the torque limit value then the engine speed will drop below the desired engine speed;
in an event that torque converter speed ratio between engine and ground propulsion drops below a speed ratio threshold, removing the engine torque limit profile and reverting to primary operating constraints.

2. The method of claim 1 wherein the torque limit profile is such that:
in an event that engine speed drops below a first threshold speed the torque limit increases gradually.

3. The method of claim 1 or claim 2 wherein:
in an event that engine speed drops below a second threshold speed for a period longer than a maximum speed drop period, t, the method comprises removing the torque limit and reverting to primary operating constraints

4. The method of claim 3 wherein the maximum speed drop period, t, is between 0.2 seconds and 2 seconds, preferably between 0.2 second and 1 second, more preferably between 0.4 seconds and 0.8 seconds, still more preferably between 0.4 seconds and 0.6 seconds, yet more preferably, between 0.45 seconds and 0.55 seconds, still more preferably 0.5 seconds or approximately 0.5 seconds.

5. The method of any preceding claim wherein the torque limit is applied to engine speeds higher than 50 % of a maximum engine speed defined by the primary operating constraints.

6. The method of any preceding claim wherein the initial torque limit value is between approximately 0.6 and 0.99 of a maximum torque available within the primary operating constraints; preferably between 0.6 and 0.9 of the maximum torque available within the primary operating constraints; more preferably between 0.65 and 0.75 of the maximum torque available within the primary operating constraints, still more preferably 0.7 of the maximum torque available within the primary operating constraints.

7. The method of any preceding claim wherein the initial torque limit value is between 270 Nm and 300 Nm.

8. The method of any preceding claim wherein the first threshold engine speed represents a drop relative to the desired engine speed of between 50 rpm and 200 rpm, or 200 rpm, or 150 rpm, or 100 rpm or 50 rpm.

9. The method of any preceding claim wherein the second threshold engine speed is higher than the first threshold engine speed, such that the second threshold engine speed represents a smaller drop than the first threshold engine speed relative to the desired engine speed.

10. A machine with an internal combustion engine used for simultaneous ground propulsion via a gearbox and hydraulic implement propulsion via a hydraulic pump, the engine controlled using a first engine map that defines primary operating constraints, wherein:
the controller configured:
to obtain an initial torque limit value from a torque limit profile that provides operating constraints that fall within the primary operating constraints;
to implement an engine toque limit that corresponds to the initial torque limit value such that in an event that a torque demand exceeds the torque limit value then the engine speed will drop below a desired engine speed; and
in an event that torque converter speed ratio between engine and ground propulsion drops below a speed ratio threshold, to remove the engine torque limit profile and revert to primary operating constraints.

11. The machine of claim 10 wherein the machine is a loader machine having a loader implement and wherein the hydraulic implement propulsion provides propulsion to the loader implement.

12. The machine of claim 10 wherein the machine is a backhoe loader having a loader implement and a backhoe implement, wherein the hydraulic implement propulsion provides propulsion to the loader implement.

## Patentansprüche

1. Verfahren zum Reduzieren von Kraftstoffverbrauch in einer Maschine (100) mit einem Verbrennungsmotor, wobei die Maschine einen Hybridmodus aufweist, in dem der Motor für einen gleichzeitigen Bodenantrieb über einen Drehmomentwandler und einen hydraulischen Hilfsantrieb über eine Hydraulikpumpe verwendet wird, wobei die Motorsteuerung ein erstes Motorkennfeld verwendet, das primäre Betriebsbeschränkungen definiert, wobei das Verfahren umfasst:
Erhalten eines anfänglichen Drehmomentgrenzwerts für den Motor von einem Drehmomentgrenzprofil (520), das Betriebsbeschränkungen bereitstellt, die innerhalb der primären Betriebsbeschränkungen fallen;
Implementieren einer Motordrehmomentgrenze, die dem anfänglichen Drehmomentgrenzwert derart entspricht, dass in einem Fall, dass ein Drehmomentbedarf den Drehmomentgrenzwert überschreitet, dann die Motordrehzahl unter die gewünschte Motordrehzahl fallen wird;
in einem Fall, dass ein Drehmomentwandlerdrehzahlverhältnis zwischen Motor und Bodenantrieb unter eine Drehzahlverhältnisschwelle fällt, Entfernen des Motordrehmomentgrenzprofils und Zurückkehren zu primären Betriebsbeschränkungen.

2. Verfahren nach Anspruch 1, wobei das Drehmomentgrenzprofil derart ist, dass:
in einem Fall, dass die Motordrehzahl unter eine erste Schwellendrehzahl fällt, die Drehmomentgrenze allmählich zunimmt.

3. Verfahren nach Anspruch 1 oder 2, wobei:
in einem Fall, dass die Motordrehzahl für einen Zeitraum, der länger als ein maximaler Drehzahlabfallzeitraum, t, ist, unter eine zweite Schwellendrehzahl fällt, das Verfahren das Entfernen der Drehmomentgrenze und das Zurückkehren in primäre Betriebsbeschränkungen umfasst

4. Verfahren nach Anspruch 3, wobei der maximale Drehzahlabfallzeitraum, t, zwischen 0,2 Sekunden und 2 Sekunden, vorzugsweise zwischen 0,2 Sekunde und 1 Sekunde, mehr bevorzugt zwischen 0,4 Sekunden und 0,8 Sekunden, noch mehr bevorzugt zwischen 0,4 Sekunden und 0,6 Sekunden, noch mehr bevorzugt zwischen 0,45 Sekunden und 0,55 Sekunden, noch mehr bevorzugt 0,5 Sekunden oder etwa 0,5 Sekunden beträgt.

5. Verfahren nach einem der vorstehenden Ansprüche, wobei die Drehmomentgrenze auf Motordrehzahlen höher als 50 % einer maximalen Motordrehzahl angewendet wird, die durch die primären Betriebsbeschränkungen definiert ist.

6. Verfahren nach einem der vorstehenden Ansprüche, wobei der anfängliche Drehmomentgrenzwert zwischen etwa 0,6 und 0,99 eines maximalen Drehmoments, das innerhalb der primären Betriebsbeschränkungen verfügbar ist; vorzugsweise zwischen 0,6 und 0,9 des maximalen Drehmoments, das innerhalb der primären Betriebsbeschränkungen verfügbar ist; mehr bevorzugt zwischen 0,65 und 0,75 des maximalen Drehmoments, das innerhalb der primären Betriebsbeschränkungen verfügbar ist, noch mehr bevorzugt 0,7 des maximalen Drehmoments liegt, das innerhalb der primären Betriebsbeschränkungen verfügbar ist.

7. Verfahren nach einem der vorstehenden Ansprüche, wobei der anfängliche Drehmomentgrenzwert zwischen 270 Nm und 300 Nm liegt.

8. Verfahren nach einem der vorstehenden Ansprüche, wobei die erste Schwellenmotordrehzahl einen Abfall relativ zu der gewünschten Motordrehzahl zwischen 50 U/min und 200 U/min oder 200 U/min oder 150 U/min oder 100 U/min oder 50 U/min darstellt.

9. Verfahren nach einem der vorstehenden Ansprüche, wobei die zweite Schwellenmotordrehzahl derart höher als die erste Schwellenmotordrehzahl ist, dass die zweite Schwellenmotordrehzahl einen kleineren Abfall als die erste Schwellenmotordrehzahl relativ zu der gewünschten Motordrehzahl darstellt.

10. Maschine mit einem Verbrennungsmotor, der für den gleichzeitigen Bodenantrieb über ein Getriebe und den hydraulischen Hilfsantrieb über eine Hydraulikpumpe verwendet wird, wobei der Motor unter Verwendung eines ersten Motorkennfelds gesteuert wird, das primäre Betriebsbeschränkungen definiert, wobei:
wobei die Steuerung konfiguriert ist:
zum Erhalten eines anfänglichen Drehmomentgrenzwerts von einem Drehmomentgrenzprofil, das Betriebsbeschränkungen bereitstellt, die innerhalb der primären Betriebseinschränkungen fallen;
zum Implementieren einer Motordrehmomentgrenze, die dem anfänglichen Drehmomentgrenzwert derart entspricht, dass in einem Fall, dass ein Drehmomentbedarf den Drehmomentgrenzwert überschreitet, die Motordrehzahl unter eine gewünschte Motordrehzahl fallen wird; und
in einem Fall, dass ein Drehmomentwandlerdrehzahlverhältnis zwischen Motor und Bodenantrieb unter eine Drehzahlverhältnisschwelle fällt, zum Entfernen des Motordrehmomentgrenzprofils und Zurückkehren zu primären Betriebsbeschränkungen.

11. Maschine nach Anspruch 10, wobei die Maschine eine Ladermaschine ist, die eine Ladereinrichtung aufweist, und wobei der hydraulische Hilfsantrieb Antrieb an die Ladereinrichtung bereitstellt.

12. Maschine nach Anspruch 10, wobei die Maschine ein Baggerlader ist, der eine Ladereinrichtung und eine Baggereinrichtung aufweist, wobei der hydraulische Hilfsantrieb Antrieb an die Ladereinrichtung bereitstellt.

## Revendications

1. Procédé de réduction de la consommation de carburant dans une machine (100) avec un moteur à combustion interne, la machine possédant un mode hybride dans lequel le moteur est utilisé pour une propulsion terrestre simultanée par l'intermédiaire d'un convertisseur de couple et d'une propulsion de l'outil hydraulique par l'intermédiaire d'une pompe hydraulique, le dispositif de commande du moteur utilisant une première cartographie du moteur qui définit des contraintes de fonctionnement primaires, dans lequel le procédé comprend :
l'obtention d'une valeur limite de couple initiale pour le moteur à partir d'un profil de limite de couple (520) fournissant des contraintes de fonctionnement qui s'inscrivent au sein des contraintes de fonctionnement primaires ;
la mise en oeuvre d'une limite de couple moteur qui correspond à la valeur limite de couple initiale de telle sorte qu'au cas où une demande de couple dépasse la valeur limite de couple, le régime moteur va alors descendre en dessous du régime moteur souhaité ;
au cas où un rapport de vitesse de convertisseur de couple entre moteur et propulsion terrestre chute en dessous d'un seuil de rapport de vitesse, le retrait du profil de limite de couple moteur et le retour aux contraintes de fonctionnement primaires.

2. Procédé selon la revendication 1, dans lequel le profil de limite de couple est tel que :
au cas où le régime moteur chute en dessous d'une première vitesse seuil, la limite de couple augmente progressivement.

3. Procédé selon la revendication 1 ou 2, dans lequel :
au cas où le régime moteur tombe en dessous d'une seconde vitesse seuil pendant une période supérieure à une période de chute de vitesse maximale, t, le procédé comprend le retrait de la limite de couple et le retour aux contraintes de fonctionnement primaires

4. Procédé selon la revendication 3, dans lequel la période de chute de vitesse maximale, t, est comprise entre 0,2 seconde et 2 secondes, de préférence entre 0,2 seconde et 1 seconde, plus préférentiellement entre 0,4 seconde et 0,8 seconde, encore plus préférentiellement entre 0,4 seconde et 0,6 seconde, et encore plus préférentiellement, entre 0,45 seconde et 0,55 seconde, encore plus préférentiellement 0,5 seconde ou approximativement 0,5 seconde.

5. Procédé selon l'une quelconque revendication précédente, dans lequel la limite de couple est appliquée à des régimes moteur supérieurs à 50 % d'un régime moteur maximal défini par les contraintes de fonctionnement primaires.

6. Procédé selon l'une quelconque revendication précédente, dans lequel la valeur limite de couple initiale est comprise entre approximativement 0,6 et 0,99 d'un couple maximal disponible au sein des contraintes de fonctionnement primaires ; de préférence entre 0,6 et 0,9 du couple maximal disponible à l'intérieur des contraintes de fonctionnement primaires ; plus préférentiellement entre 0,65 et 0,75 du couple maximal disponible au sein des contraintes de fonctionnement primaires, encore plus préférentiellement 0,7 du couple maximal disponible au sein des contraintes de fonctionnement primaires.

7. Procédé selon l'une quelconque revendication précédente, dans lequel la valeur limite de couple initiale est comprise entre 270 Nm et 300 Nm.

8. Procédé selon l'une quelconque revendication précédente, dans lequel le premier régime moteur seuil représente une chute par rapport au régime moteur souhaité entre 50 tr/min et 200 tr/min, ou 200 tr/min, ou 150 tr/min, ou 100 tr/min ou 50 tr/min.

9. Procédé selon l'une quelconque revendication précédente, dans lequel le second régime moteur seuil est supérieur au premier régime moteur seuil, de telle sorte que le second régime moteur seuil représente une chute plus petite que le premier régime moteur seuil par rapport au régime moteur souhaité.

10. Machine avec un moteur à combustion interne utilisé pour une propulsion terrestre simultanée par l'intermédiaire d'une boîte de vitesses et d'une propulsion de l'outil hydraulique par l'intermédiaire d'une pompe hydraulique, le moteur étant
commandé à l'aide d'une première cartographie du moteur qui définit des contraintes de fonctionnement primaires, dans lequel :
le dispositif de commande est configuré :
pour obtenir une valeur limite de couple initiale à partir d'un profil de limite de couple qui fournit des contraintes de fonctionnement qui s'inscrivent au sein des contraintes de fonctionnement primaires ;
pour mettre en oeuvre une limite de couple moteur qui correspond à la valeur limite de couple initiale de telle sorte qu'au cas où une demande de couple dépasse la valeur limite de couple, le régime moteur va alors descendre en dessous d'un régime moteur souhaité ; et
au cas où un rapport de vitesse de convertisseur de couple entre moteur et propulsion terrestre chute en dessous d'un seuil de rapport de vitesse, retirer le profil de limite de couple moteur et revenir aux contraintes de fonctionnement primaires.

11. Machine selon la revendication 10, dans laquelle la machine est une chargeuse possédant un outil de chargeuse et dans laquelle la propulsion de l'outil hydraulique fournit une propulsion à l'outil de chargeuse.

12. Machine selon la revendication 10, dans laquelle la machine est une chargeuse-pelleteuse possédant un outil de chargeuse et un outil de chargeuse-pelleteuse, dans laquelle la propulsion de l'outil hydraulique fournit une propulsion à l'outil de chargeuse.
